# NEUE EUROPÄISCHE PATENTSCHRIFT

(11) **EP 2 643 434 B2**
(45) Veröffentlichungstag und Bekanntmachung des Hinweises auf die Entscheidung über den Einspruch: **28.05.2025**
(45) Hinweis auf die Patenterteilung: 19.10.2016
(21) Anmeldenummer: 11822818.8
(22) Anmeldetag: 22.11.2011
(51) Int. Cl.: C10G 73/40, B01J 2/00, C08L 91/06, B01J 2/30, B01J 2/16

(54) **VERFAHREN ZUM MAHLEN VON WACHSEN UNTER VERWENDUNG VON MAHLHILFEMITTELN IN EINER STRAHLMÜHLE, VERWENDUNG VON POLYOLEN ALS MAHLHILFSMITTEL UND WACHS-PULVER ENTHALTEND POLYOLE**
PROCESS FOR GRINDING WAXES USING GRINDING AIDS IN A JET MILL, USE OF POLYOLS AS A GRINDING AID AND WAX POWDER COMPRISING POLYOLS
PROCÉDÉ DE BROYAGE DE CIRES À L'AIDE D'AUXILIAIRES DE BROYAGE DANS UN PULVÉRISATEUR À JET, UTILISATION DE POLYOLS EN TANT QU'AUXILIAIRES DE BROYAGE ET POUDRE DE CIRE CONTENANT DES POLYOLS

(30) Priorität: 23.11.2010 DE 102010052028
(43) Veröffentlichungstag der Anmeldung: 02.10.2013
(73) Patentinhaber: SASOL Germany GmbH, 20537 Hamburg (DE)
(72) Erfinder: SCHNEIDER, Ulrich, 25492 Heist (DE)
(74) Vertreter: Müller Schupfner & Partner Patent- und Rechtsanwaltspartnerschaft mbB (Hamburg)
(86) Internationale Anmeldenummer: PCT/DE2011/002021
(87) Internationale Veröffentlichungsnummer: WO 2012/069041

(56) Entgegenhaltungen:
- EP-A1- 2 006 322
- WO-A1-03/104330
- US-A- 5 221 337
- US-A- 5 743 949

## Beschreibung

Die vorliegende Erfindung betrifft ein Verfahren zum Mahlen von Wachsen, insbesondere Paraffin-Wachsen, unter Verwendung eines Polyols als Mahlhilfsmittel in einer Strahlmühle, insbesondere einer Fließbett- Gegenstrahlmühle, so hergestellte Wachspulver und die Verwendung der Polyole als Mahlhilfsmittel für Wachse.

Es ist bekannt, Wachse mit Mühlen unterschiedlicher Bauarten zu Pulvern zu vermahlen. Hierbei ist darauf zu achten, dass die in das Mahlgut eingebrachte Menge an Energie so gering wie möglich ist, um ein Anschmelzen und damit ein Verblocken bzw. Anhaften des Mahlgutes in der Mahlkammer oder der Produktteilchen untereinander zu vermeiden. Weiterhin hängt die Auswahl der Art der Mühle auch von der gewünschten Feinheit des Mahlgutes ab. Je gröber die Korngröße, desto variabler ist man bei der Auswahl der möglichen Maschinenkonstruktionen der Mühle. Wachse mit entsprechend hohen Schmelzpunkten können bei Raumtemperatur gemahlen werden. Verträgt das zu zerkleinernde Wachs den durch den Mahlvorgang bewirkten Energieeintrag nicht, ohne zu verkleben oder gar anzuschmelzen, muss die Mahltemperatur durch von außen erfolgende Kühlung der Mühle, des Gastransportstroms und/oder des Mahlgutes, ggf. auch des Recyclestroms, abgesenkt werden, um das gewünschte Mahlergebnis zu erzielen.

Die US 5221337 offenbart das Vermischen eines Polyols wie Ethylenglykol oder Polyethylenglykol und eines Wachses und Silika und das Zerkleinern des Silika in unterschiedlichen Mühlen zur Erzeugung eines Silika-Mattierungsmittels für Farben und Lacke. Der Polyolgehalt des fertigen Mattierungsmittels beträgt 1 bis 25 Gew.-% und der Wachsgehalt 1 bis 25 Gew.-%. Das Wachs dient als Überzugsmittel für das zu mahlende Silika.

Aufgabe der vorliegenden Erfindung ist ein Verfahren bereitzustellen, dass das Mahlen von Wachsen, z.B. mit Erstarrungspunkten (jeweils ASTM D 938-05 / DIN ISO 2207:1983) von kleiner 115°C, insbesondere kleiner 110°C, ermöglicht und zu Wachspulvern mit mittleren Partikelgrößen d₅₀ (Zahlenmittel) von kleiner 10 µm, insbesondere kleiner 7 µm führt, insbesondere ohne Kühlung. Nach einer weiteren Definition betragen die mittleren Partikelgrößen d₉₀ (Zahlenmittel) kleiner 15 µm, insbesondere kleiner 10 µm (jeweils nach ISO 13320:2009), ebenso insbesondere ohne Kühlung.

Die Aufgabe ist erfindungsgemäß gelöst durch den Gegenstand der unabhängigen Ansprüche. Vorteilhafte Weiterbildungen der Erfindung sind in den Unteransprüchen angegeben bzw. nachfolgend beschrieben.

Die vorliegende Erfindung macht das Mahlen von Wachsen möglich, die bisher nicht oder nur unter großem Aufwand an Maschinenreinigung oder bei sehr niedrigen Prozesstemperaturen mahlbar waren. Dies können sowohl Petroleum stämmige Wachse als auch synthetische oder natürliche Wachse sowie deren modifizierte Formen sein, etwa partiell oxidierte Paraffin-Wachse, welche mit Hilfe einer Strahlmühle als Mahlwerkzeug zerkleinert werden.

Wachse sind Stoffe, die durch ihre mechanisch-physikalischen Eigenschaften definiert sind. Ihre chemische Zusammensetzung und Herkunft kann sehr unterschiedlich sein. Ein Stoff wird als Wachs im Sinne der vorliegenden Erfindung bezeichnet, wenn er bei 20°C knetbar fest ist und über 40°C ohne Zersetzung schmilzt und wenig oberhalb des Schmelzpunktes leicht flüssig wird / wenig viskos ist. Besonders geeignete Wachse sind Wachse mit Erstarrungspunkten kleiner 115°C, insbesondere Erstarrungspunkten kleiner 110°C oder sogar kleiner 80°C. Insbesondere ist der Erstarrungspunkt der Wachse größer 40°C.

Besonders geeignet sind Kohlenwasserstoff-Wachse und deren Derivate wie partiell oxidierte Kohlenwasserstoff-Wachse, z.B. solche mit einer Säurezahl von kleiner 30 mg KOH/g. Kohlenwasserstoff-Wachse umfassen z.B. Fischer-Tropsch-Wachse oder Paraffine-Wachse. Es ist aber auch möglich, partiell oxidierte Paraffin-Wachse oder Fischer-Tropsch-Wachse erfindungsgemäß zu Pulvern zu vermahlen. Beispiele für Handelsprodukte, die sich zum Vermahlen nach dem erfindungsgemäßen Verfahren besonders eignen, sind Sasolwax C105, Sasolwax H1, Sasolwax C80 oder Sasolwax 7040.

Das Mahlhilfsmittel wird dem Mahlgut entweder in fester Form oder aber während des Mahlvorganges in flüssiger Form zugegeben und verbleibt nach dem Mahlvorgang im Mahlgut bzw. verdampft ganz oder teilweise während des Mahlvorganges. Soweit gewünscht, kann das Mahlhilfsmittel nachfolgend auch entfernet werden, etwa durch Strippen mit einem Strippgas.

Als Mahlhilfsmittel werden Polyole eingesetzt mit 3 bis 7 Kohlenstoffatomen und ggf. 1 bis 4 Ether-Gruppen. Polyole im Sinne der vorliegenden Verbindung sind Alkohole mit zumindest zwei freien Hydroxy-Gruppen, insbesondere drei oder 4 freien Hydroxy-Gruppen.

Besonders bevorzugt sind Trimethylolpropan, Diethylenglykol, Propylenglykol oder Trimethylenglycol (1,3-Propandiol) oder Neopentylglycol. Diese verhindern das Anhaften des Mahlgutes an den Wandungen der Maschine sowie das Verkleben der Partikel untereinander nach dem Mahlvorgang. Die Zugabemenge des Mahlhilfsmittels beträgt je nach zu mahlendem Wachs von 0,01 bis zu 5,0 Gew.% oder 0,1 bis 3,0 Gew.% und insbesondere 0,2 bis 2,5 Gew.%.

Die Zerkleinerung erfolgt vorzugsweise mit einer Strahlmühle, vorzugsweise einer Gegenstrahlmühle und insbesondere einer Fließbett - Gegenstrahlmühle. Der Vorgang des Mahlens erfolgt vorzugsweise bei Temperatur von z.B. 10 bis 40°C, insbesondere üblichen Umgebungstemperaturen von 20 bis 30°C.

Strahlmühlen sind seit langem bekannte Zerkleinerungsmaschinen, in denen die zu zerkleinernden Teilchen durch Gasströme beschleunigt und durch Zusammenprall zerkleinert werden. Es gibt eine Anzahl unterschiedlicher Strahlmühlenkonstruktionen. Sie unterscheiden sich durch die Art der Gasführung, durch die Art des Aufprallens der Teilchen gegeneinander oder auf eine Prallfläche und dadurch, ob die zu zerkleinernden Teilchen im Gasstrahl mitgeführt werden oder ob der Gasstrahl auf die Teilchen auftrifft und sie mitreißt. Als Mahlgas wird gewöhnlich Luft verwendet. Bevorzugt sind Gegenstrahlmühlen und insbesondere Fließbett-Gegenstrahlmühlen.

Bei der Fließbett-Gegenstrahlmühle, wie sie beispielsweise aus der EP 0139279 A2 bekannt sind, treffen Gasstrahlen in einer Mahlkammer aufeinander, in welcher sich das Mahlgut in Form eines Fließbettes befindet. Die Vermahlung erfolgt durch Aufeinanderprall der Mahlgutteilchen gegeneinander, vorzugsweise praktisch ausschließlich hierdurch. Der Fließbett-Gegenstrahlmühle ist i.d.R. ein Sichter zugeordnet, in welchem das gewonnene Feingut vom noch nicht genügend zerkleinerten Grobgut abgetrennt wird. Das Grobgut wird in die Mahlkammer zurückgeführt.

Die erfindungsgemäß eingesetzte Fließbettstrahlmühle weist vorzugsweise eine von Einbauten freie Mahlkammer auf, in deren Bodenbereich eine oder mehrere Düsen angeordnet sind. Es können aber auch Einbauten in Form von Prallflächen vorgesehen werden.

Die Mahlkammer ist dabei vorzugsweise bis zu einer solchen Höhe vollständig mit dem zu zerkleinernden Mahlgut gefüllt, das ein Aufeinanderprall der Mahlgutteilchen gegeneinander sichergestellt ist. Mahlgut und Gas treten als Fontäne geringer Geschwindigkeit aus dem Mahlgutbett aus, wobei diese Fontäne zur Speisung eines oberhalb der Oberfläche des Gutbettes vorgesehenen, unabhängig vom Impuls des aus der Bodendüse austretenden Strahls betriebenen Sichters dient. Es können bei der Mahlung eine Anzahl weiterer Strahldüsen auf einem Kreis, etwa auf Höhe der Oberkante des Füllbettes, angeordnet sein, wobei ihre Achsen sich in einem Punkt schneiden.

Die Erfindung wird anhand von Beispielen erläutert, ohne auf diese beschränkt zu sein.

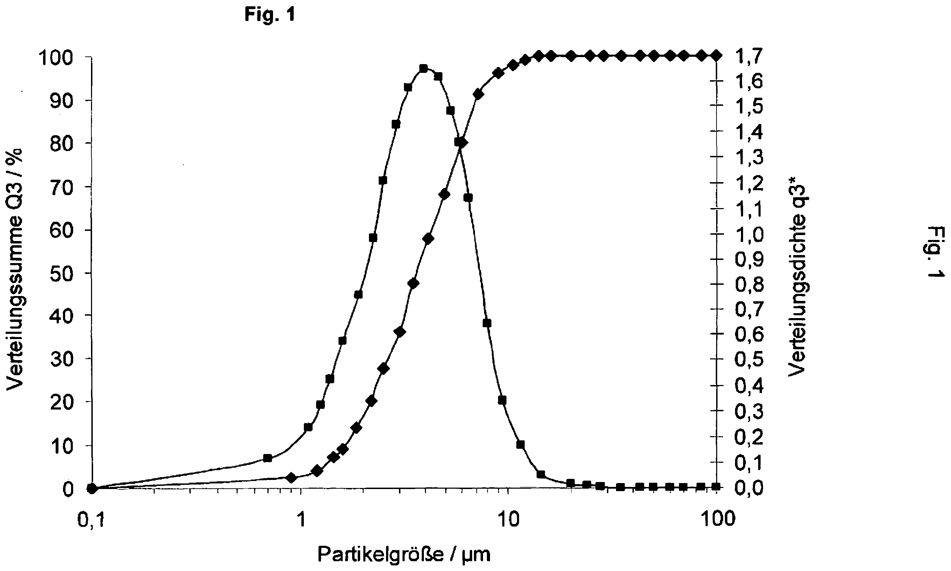

Fig. 1 zeigt die Partikelgrößenverteilung eines mit Hilfe einer Fließbettgegenstrahlmühle erhaltenen Pulvers eines Fischer-Tropsch Paraffin-Wachses enthaltend Trimethylolpropan.

### Versuchsbeschreibung :

In einer Fließbettgegenstrahlmühle des Typs Hosokawa (AFG 400) wurden Trimethylolpropan als festes Mahlhilfsmittel zusammen mit einem Fischer-Tropsch Paraffin-Wachs (Sasolwax^{®} C80), bestehend aus gesättigten Kohlenwasserstoffen und aufweisend einen Erstarrungspunkt (congealing point) von 78 bis 83°, insbesondere etwa 80°C, als Mahlgut eingebracht. Die Vordosierung des Mahlgutes als auch des Mahlhilfsmittels erfolgte jeweils mittels einer Dosierschnecke, so dass 1 Gew.% Trimethylolpropan bezogen auf das Gemisch aus Mahlgut und Mahlhilfsmittel vermahlen wurden. Durch die Anordnung ließ sich das Mahlgut, welches ansonsten zum Verklumpen und Zusetzen der Mühle neigt, bei Raumtemperatur gut vermahlen. Es konnten Feinheiten bis d₉₀ von 7,5 µm erzielt werden. Das Zusetzen der Maschine war stark vermindert. Die erzielte Partikelgrößenverteilung ist in Fig. 1 dargestellt.

## Patentansprüche

1. Verfahren zum Mahlen von Wachsen zur Herstellung von Wachspulvern
- mit einer mittleren Partikelgröße d₅₀ von kleiner 10 µm oder
- mit einer mittleren Partikelgrößen d₉₀ von kleiner 15 µm oder
- beides
umfassend den Schritt des in Kontaktbringens eines Wachses als Mahlgut mit zumindest einem Polyol als Mahlhilfsmittel und das Mahlen in einer Strahlmühle,
a) wobei das Polyol zu 0,01 bis zu 5,0 Gew.%, bezogen auf die Summe an Mahlgut und Mahlhilfsmittel, während des Mahlvorgangs zugesetzt ist,
b) wobei das Wachspulver zu größer 97,5 Gew.% ausschließlich aus Wachs(en) und Polyol(en) besteht,
c) wobei das Wachspulver 0,01 bis zu 5,0 Gew.-% zumindest des Polyols bezogen auf die Summe an Wachspulver plus Polyol umfasst, und
d) wobei das Polyol 3 bis 7 Kohlenstoffatome, gegebenenfalls 1 bis 4 Ether-Gruppen pro Molekül und zumindest 2 freie Hydroxy-Gruppen pro Molekül aufweist.

2. Verfahren nach Anspruch 1, **dadurch gekennzeichnet, dass** die Strahlmühle eine Gegenstrahlmühle, insbesondere eine Fließbett- Gegenstrahlmühle ist.

3. Verfahren nach Anspruch 1 oder 2, **dadurch gekennzeichnet, dass** der Mahlvorgang bei 10 bis 40°C erfolgt.

4. Verfahren nach zumindest einem der vorhergehenden Ansprüche, **dadurch gekennzeichnet, dass** das Wachs ein Paraffin-Wachs oder Fischer-Tropsch-Wachs ist.

5. Verfahren nach zumindest einem der vorhergehenden Ansprüche, **dadurch gekennzeichnet, dass** das Mahlhilfsmittel dem Mahlgut entweder in fester Form oder aber während des Mahlvorganges in flüssiger oder verflüssigter Form zugegeben wird.

6. Verfahren nach Anspruch 1, **dadurch gekennzeichnet, dass** die mittlere Partikelgröße d₅₀ des Wachspulvers kleiner 7 µm beträgt.

7. Verfahren nach Anspruch 1, **dadurch gekennzeichnet, dass** die mittlere Partikelgröße d₉₀ des Wachspulvers kleiner 10 µm beträgt.

8. Wachspulver mit
- einer mittleren Partikelgröße d₅₀ von kleiner 10 µm oder
- einer mittleren Partikelgrößen d₉₀ von kleiner 15 µm oder
- beides,
umfassend weiterhin 0,01 bis zu 5,0 Gew.%, insbesondere 0,1 bis zu 3,0 Gew.-% und besonders bevorzugt 0,2 bis 2,5 Gew.-%, zumindest eines Polyols, bezogen auf die Summe an Wachspulver plus Polyol, wobei das Wachspulver zu größer 97,5 Gew.% ausschließlich aus Wachs(en) und Polyol(en) besteht und wobei das Polyol 3 bis 7 Kohlenstoffatome, gegebenenfalls 1 bis 4 Ether-Gruppen pro Molekül und zumindest 2 freie Hydroxy-Gruppen pro Molekül aufweist.

9. Wachspulver nach Anspruch 8, **dadurch gekennzeichnet, dass** das Wachspulver zu größer 98 Gew.% ausschließlich aus Wachs(en) und Polyol(en) besteht.

10. Wachspulver nach Anspruch 8 oder 9 , **dadurch gekennzeichnet, dass** das Wachs einen Erstarrungspunkt von größer 40°C und kleiner 115°C, insbesondere kleiner 110°C aufweist.

11. Wachspulver nach Anspruch 8, **dadurch gekennzeichnet, dass** die mittlere Partikelgröße d₅₀ des Wachspulvers kleiner 7 µm beträgt.

12. Wachspulver nach Anspruch 8, **dadurch gekennzeichnet, dass** die mittlere Partikelgröße d₉₀ des Wachspulvers kleiner 10 µm beträgt.

## Claims

1. Method for grinding waxes for the production of wax powders, having
- an average particle size d₅₀ of less than 10 µm, or
- an average particle size d₉₀ of less than 15 µm, or
- both,
comprising
the step of contacting a wax as material to be grinded with at least one polyol as a grinding aid and
the grinding in a jet mill,
a) wherein the polyol is added in an amount of 0.01 up to 5.0 wt%, based on the sum of material to be grinded and grinding aid, in the grinding process,
b) wherein the wax powder consists to greater than 97.5 wt% of wax(es) and polyol(s) exclusively,
c) wherein the wax powder comprises 0.01 up to 5.0 wt% of at least the polyol based on the sum of wax powder plus polyol, and
d) wherein the polyol has 3 to 7 carbon atoms, optionally 1 to 4 ether groups per molecule and at least 2 free hydroxy groups per molecule.

2. Method according to Claim 1, **characterized in that** the jet mill is a counter jet mill, particularly a fluidised bed counter jet mill.

3. Method according to Claim 1 or 2, **characterized in that** the grinding process is carried out at 10 to 40°C.

4. Method according to at least one of the preceding Claims, **characterized in that** the wax is a paraffin wax or a Fischer-Tropsch-Wax.

5. Method according to at least one of the preceding Claims, **characterized in that** the grinding aid is added to the material to be grinded either in solid form, or during the grinding process in a liquid or liquefied form.

6. Method according to Claim 1, **characterized in that** the average particle size d₅₀ of the wax powder is less than 7 µm.

7. Method according to Claim 1, **characterized in that** the average particle size d₉₀ of the wax powder is less than 10 µm.

8. Wax powder, having
- an average particle size d₅₀ of less than 10 µm, or
- an average particle size d₉₀ of less than 15 µm, or
- both,
further comprising 0.01 up to 5.0 wt%, particularly 0.1 to 3.0 wt% and particularly preferably 0.2 to 2.5 wt% of at least one polyol, based on the sum of wax powder plus polyol, wherein the amount of wax powder consists to greater than 97.5 wt% of wax(es) and polyol(s) exclusively, and wherein the polyol has 3 to 7 carbon atoms, optionally 1 to 4 ether groups per molecule and at least 2 free hydroxy groups per molecule.

9. Wax powder according to Claim 8, **characterized in that** the wax powder consists to greater than 98 wt% of wax(es) and polyol(s) exclusively.

10. Wax powder according to Claim 8 or 9, **characterized in that** the wax has a congealing point of greater than 40°C and less than 115°C, particularly less than 110°C.

11. Wax powder according to Claim 8, **characterized in that** the average particle size d₅₀ of the wax powder is less than 7 µm.

12. Wax powder according to Claim 8, **characterized in that** the average particle size d₉₀ of the wax powder is less than 10 µm.

## Revendications

1. Procédé de broyage de cires pour la production de poudres de cire
- ayant une dimension moyenne de particule d₅₀ de moins de 10 µm ou
- ayant une dimension moyenne de particule d₉₀ de moins de 15 µm ou
- les deux
comprenant l'étape de mise en contact d'une cire en tant que matière à broyer avec au moins un polyol en tant qu'auxiliaire de broyage et le broyage dans un broyeur à jet,
a) le polyol étant ajouté pendant le processus de broyage à raison de 0,01 à 5,0 % en poids, par rapport à la somme de matière à broyer et d'auxiliaire de broyage ;
b) la poudre de cire se composant à plus de 97,5 % en poids de cire(s) et de polyol(s) exclusivement ;
c) la poudre de cire comportant 0,01 à 5,0% en poids au moins du polyol par rapport à la somme de poudre de cire plus polyol ; et
d) le polyol présentant 3 à 7 atomes de carbone, le cas échéant 1 à 4 groupes éther par molécule et au moins 2 groupes hydroxy libres par molécule.

2. Procédé selon la revendication 1, **caractérisé par le fait que** le broyeur à jet est un broyeur à contre-jets, en particulier un broyeur à contre-jets à lit fluidisé.

3. Procédé selon l'une des revendications 1 ou 2, **caractérisé par le fait que** le processus de broyage a lieu à 10 à 40 °C.

4. Procédé selon au moins l'une des revendications précédentes, **caractérisé par le fait que** la cire est une cire de paraffine ou une cire de Fischer-Tropsch.

5. Procédé selon au moins l'une des revendications précédentes, **caractérisé par le fait que** l'auxiliaire de broyage est ajouté à la matière à broyer soit sous forme solide, soit, mais pendant le processus de broyage, sous forme liquide ou liquéfiée.

6. Procédé selon la revendication 1, **caractérisé par le fait que** la dimension moyenne de particule d₅₀ de la poudre de cire a une valeur inférieure à 7 µm.

7. Procédé selon la revendication 1, **caractérisé par le fait que** la dimension moyenne de particule d₉₀ de la poudre de cire a une valeur inférieure à 10 µm.

8. Poudre de cire ayant
- une dimension moyenne de particule d₅₀ de moins de 10 µm ou
- une dimension moyenne de particule d₉₀ de moins de 15 µm ou
- les deux,
comprenant en outre 0,01 à 5,0 % en poids, en particulier 0,1 à 3,0 % en poids et, de façon particulièrement préférée 0,2 à 2,5 % en poids, d'au moins un polyol, par rapport à la somme de poudre de cire plus polyol, la poudre de cire se composant à plus de 97,5 % en poids de cire(s) et de polyol(s) exclusivement, et le polyol présentant 3 à 7 atomes de carbone, le cas échéant 1 à 4 groupes éther par molécule et au moins 2 groupes hydroxy libres par molécule.

9. Poudre de cire selon la revendication 8, **caractérisée par le fait que** la poudre de cire se compose à plus de 98 % en poids de cire(s) et de polyol(s) exclusivement.

10. Poudre de cire selon l'une des revendications 8 ou 9, **caractérisée par le fait que** la cire présente un point de solidification de plus de 40 °C et de moins de 115 °C, en particulier de moins de 110 °C.

11. Poudre de cire selon la revendication 8, **caractérisée par le fait que** la dimension moyenne de particule d₅₀ de la poudre de cire a une valeur inférieure à 7 µm.

12. Poudre de cire selon la revendication 8, **caractérisée par le fait que** la dimension moyenne de particule d₉₀ de la poudre de cire a une valeur inférieure à 10 µm.
